# FASCICULE DE BREVET EUROPEEN

(11) **EP 1 717 418 B1**
(45) Date de publication et mention de la délivrance du brevet: **06.08.2008**
(21) Numéro de dépôt: 06113055.5
(22) Date de dépôt: 25.04.2006
(51) Int. Cl.: F01D 11/00

(54) **Dispositif d'étanchéité pour une enceinte d'une turbomachine et moteur d'aéronef équipé de celui-ci**
Dichtungsvorrichtung für einen Turbomaschinenstator und ein Luftfahrzeugstriebwerk mit einer solchen Vorrichtung
Sealing device for a stator of a turbomachine and an aircraft engine equiped with such a device

(30) Priorité: 27.04.2005 FR 0551090
(43) Date de publication de la demande: 02.11.2006
(73) Titulaire: SNECMA, 75015 Paris (FR)
(72) Inventeur: Audeon, David, 91300 Massy (FR); Benderradji, Kamel, 77000 Livry sur Seine (FR); Marchi, Marc Roger, 77350 Le Mée sur Seine (FR)
(74) Mandataire: Poulin, Gérard

(56) Documents cités:
- US-A- 4 063 845
- US-A- 6 076 835
- US-B1- 6 575 697

## Description

### DOMAINE TECHNIQUE

La présente invention se rapporte au domaine de l'étanchéité aux gaz entre une veine d'écoulement des gaz d'une turbomachine et une enceinte séparée de la veine par un anneau. Elle se propose d'apporter une solution au problème de la réintroduction d'air très chaud dans une enceinte, l'air très chaud provenant de la veine d'écoulement des gaz à très haute température.

L'invention vise en particulier une turbine comprenant un carter, une première partie d'anneau et une seconde partie d'anneau disposées dans le prolongement l'une de l'autre et espacés par un jeu fonctionnel.

### ÉTAT DE LA TECHNIQUE ANTÉRIEURE

Dans une turbomachine, telle qu'un moteur d'aéronef, la veine d'écoulement des gaz très chaud est délimitée globalement par un anneau, réalisé en plusieurs parties d'anneau successives et disjointes qui correspondent à des secteurs successifs de la turbomachine. Deux secteurs voisins sont susceptibles d'avoir des déplacements différents lors du fonctionnement de la turbomachine, de sorte que les deux parties d'anneau correspondantes sont susceptibles de se déplacer dans des mouvements indépendants l'un de l'autre, à la fois suivant la direction axiale et suivant la direction radiale.

Afin d'autoriser des déplacements relatifs entre deux parties d'anneau voisines, celles-ci sont séparées par un jeu fonctionnel, qui autorise aussi leur dilatation thermique éventuelle.

Mais, du fait de la présence de ce jeu fonctionnel entre les deux parties d'anneau, des gaz très chaud circulant dans la veine sont susceptibles d'être réintroduits dans l'enceinte à travers ce jeu fonctionnel.

Les documents US 6 575 697 B1 et US 607 683 5 décrivent l'état antérieur de la technique.

### EXPOSÉ DE L'INVENTION

La présente invention a pour but de remédier à l'inconvénient énoncé ci-dessus.

Selon un premier aspect, l'invention se rapporte à une turbomachine comportant les caractéristiques énumérées dans la revendication 1.

Des caractéristiques complémentaires ou alternatives sont énumérées dans les revendications dépendantes.

Selon un deuxième aspect, l'invention se rapporte à un moteur d'aéronef équipé d'une telle turbine.

### BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :
- la figure 1 représente, en coupe axiale, deux secteurs successifs d'une turbine d'un moteur d'aéronef, séparés par un jeu fonctionnel, en l'absence de dispositif d'étanchéité ;
- la figure 2 représente, en coupe axiale agrandie, deux secteurs successifs d'une turbine d'un moteur d'aéronef, séparés par un jeu fonctionnel, en présence d'un premier mode de réalisation du dispositif d'étanchéité selon l'invention ;
- la figure 3 représente, en coupe axiale agrandie, deux secteurs successifs d'une turbine d'un moteur d'aéronef, séparés par un jeu fonctionnel, en présence d'un deuxième mode de réalisation du dispositif d'étanchéité selon l'invention ;
- la figure 4 représente, en vue en perspective, une portion du dispositif d'étanchéité selon le premier mode de réalisation ; et
- la figure 5 représente, en vue en perspective, une portion du dispositif d'étanchéité selon le deuxième mode de réalisation.

### EXPOSÉ DÉTAILLÉ DE MODES DE RÉALISATION PARTICULIERS

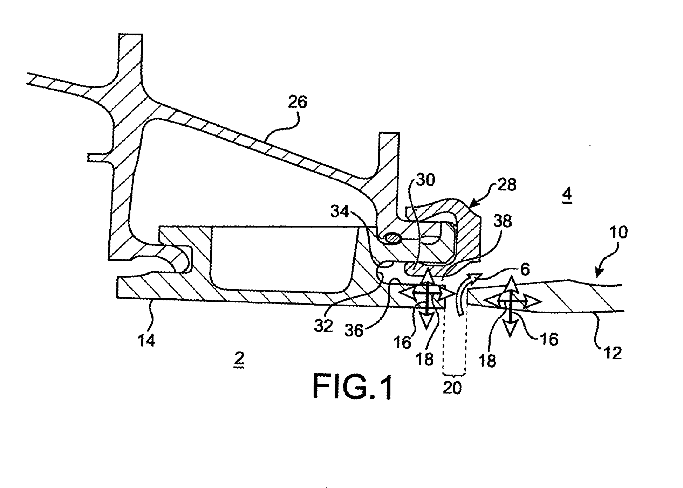

Sur la figure 1 est représenté une portion d'anneau 10 de turbine d'un moteur d'aéronef, qui sépare une veine d'écoulement des gaz 2 d'une enceinte extérieure 4. Cet anneau 10 comporte une première partie d'anneau 12 et une deuxième partie d'anneau 14. Les deux parties d'anneau 12, 14 appartiennent chacune à deux secteurs de la turbomachine, qui sont deux secteurs de turbine sur l'exemple illustré. Lors du fonctionnement de la turbomachine, chaque partie d'anneau 12, 14 est susceptible de se déplacer suivant la direction radiale, comme le montrent les flèches 16 et suivant la direction axiale, comme le montrent les flèches 18. Du fait que les deux parties d'anneau 12, 14 appartiennent à des secteurs différents, leurs mouvements respectifs sont indépendants l'un de l'autre au cours du fonctionnement de la turbomachine. De plus, chaque partie d'anneau est susceptible de subir une dilatation thermique lors du fonctionnement de la turbomachine.

Afin de permettre ces mouvements de chaque partie d'anneau 12, 14 et leur dilatation thermique éventuelle, un jeu fonctionnel 20 est prévu entre les deux parties d'anneaux 12, 14.

Lors du fonctionnement de la turbomachine, la présence de ce jeu fonctionnel 20 a pour conséquence que de l'air très chaud circulant dans la veine d'écoulement des gaz 2 passe dans l'enceinte extérieure 4 à travers ce jeu fonctionnel 20, comme l'indique la flèche 6.

Le but de la présente invention est d'éviter ce passage de gaz très chaud dans l'enceinte 4 en provenance de la veine 2 à travers le jeu 20, afin d'éviter une élévation de température de l'enceinte 4.

Sur la figure 1, la première partie d'anneau 12 est représentée très schématiquement par l'une de ses extrémités, tandis que la deuxième partie d'anneau 14 est représentée en étant fixée sur un carter de turbine 26, par l'intermédiaire d'une pièce annulaire en forme de mors 28. A cet effet, la deuxième partie d'anneau 14 présente une gorge annulaire 32 ayant deux bords 34, 36 s'étendant suivant la direction axiale. L'une des mâchoires 30 de la pièce en forme de mors 28 vient s'appuyer contre le bord radialement extérieur 34 de la gorge 32. Entre la mâchoire 30 et le bord radialement intérieur 36 de la gorge annulaire 32 se trouve un espace annulaire 38.

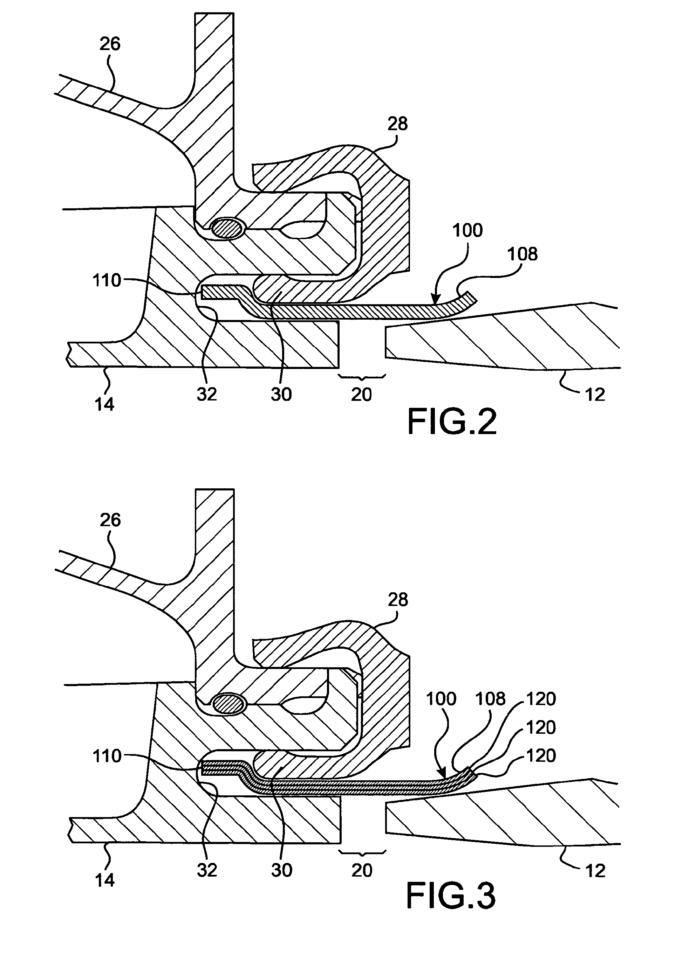

Comme illustré sur les figures 2 à 5, le dispositif d'étanchéité selon l'invention comporte une plaque annulaire 100 enroulée sur elle-même, qui obstrue le jeu fonctionnel 20 présent entre les deux parties d'anneau 12, 14, et qui est maintenue au moyen de pièces faisant partie de l'environnement immédiat du jeu fonctionnel 20.

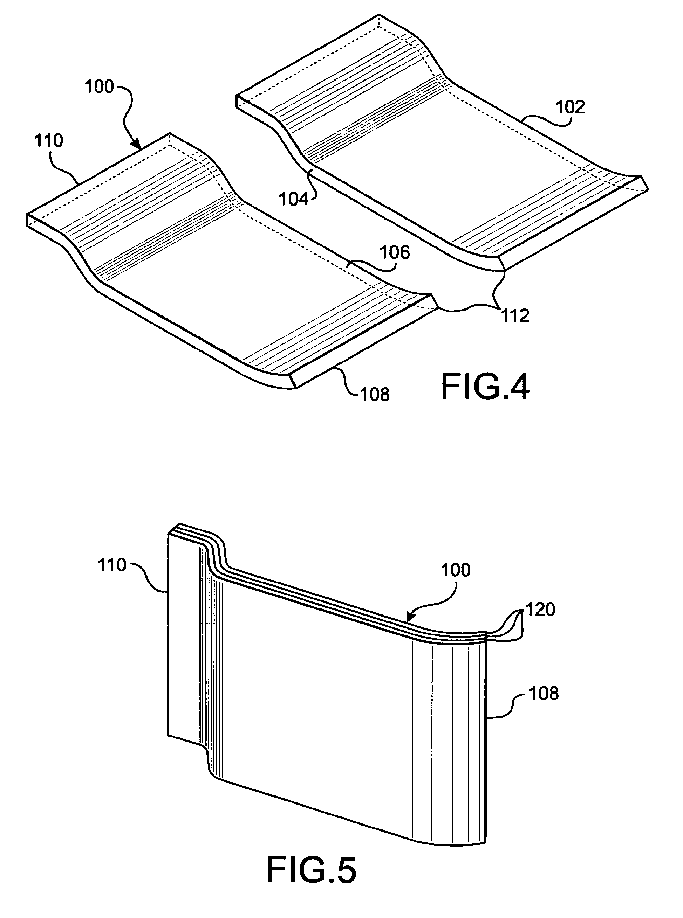

Un premier mode de réalisation de cette plaque annulaire 100 est représenté sur les figures 2 et 4. La figure 4 montre une portion de la plaque annulaire 100 isolée, en vue en perspective, tandis que la figure 2 montre celle-ci en situation, en coupe axiale. Selon le premier mode de réalisation, cette plaque annulaire 100 se présente sous la forme d'une « tôle épaisse » 102, relativement peu flexible, et enroulée sur elle-même sur sensiblement un tour. Entre les deux extrémités libres 104, 106 de ladite plaque annulaire 100 est laissé un intervalle déterminé 112, qui permet le montage de cette tôle épaisse, peu flexible, à l'endroit souhaité. Cet intervalle 112 permet aussi la dilatation de cette tête lorsque la température augmente dans la turbomachine.

Comme illustré sur la figure 2, la forme de la plaque annulaire 100 est adaptée pour que celle-ci recouvre le jeu fonctionnel 20 et soit maintenue en place de manière à obstruer celui-ci. Elle présente un premier bord longitudinal 108 du côté de la première partie d'anneau 12 (à droite sur la figure 2), et un deuxième bord longitudinal 110 du côté de la deuxième partie d'anneau 14 (à gauche sur la figure 2).

Le deuxième bord longitudinal 110 s'emboîte dans l'espace annulaire 38. A cet effet, il forme un épaulement épousant la forme de l'extrémité de la mâchoire 30. De préférence, il arrive en butée contre le fond de la gorge annulaire 32. L'épaisseur de la plaque annulaire 100 est adaptée pour que la plaque annulaire 100 et la mâchoire 30 soient jointes l'une contre l'autre et serrées de manière ajustée dans la gorge annulaire 32. Le premier bord longitudinal 108 est posé sur la première partie d'anneau 12. Il est légèrement relevé radialement vers l'extérieur de manière à mieux appuyer la plaque 100 sur la première partie d'anneau 12.

Le premier mode de réalisation de la plaque annulaire 100 présente un léger inconvénient en ce que des gaz très chauds provenant de la veine d'écoulement des gaz 2 parviennent quand même à s'introduire dans l'enceinte extérieure 4 à travers l'intervalle de montage 112.

Un deuxième mode de réalisation de la plaque annulaire 100 permet de remédier à cet inconvénient. Il est représenté sur les figures 3 et 5. La figure 5 montre une portion de la plaque annulaire 100 isolée, en vue en perspective, tandis que la figure 3 montre celle-ci en situation, en coupe axiale. Selon le deuxième mode de réalisation, cette plaque annulaire 100 se présente sous la forme d'une « tôle fine » 120 relativement flexible, et enroulée sur elle-même sur plusieurs tours à la façon d'une spirale. Sur l'exemple illustré, elle est enroulée sur trois tours.

Un avantage du deuxième mode de réalisation par rapport au premier mode de réalisation réside dans le fait que la « tôle fine » 120 est plus flexible que la « tôle épaisse » 102 du premier mode de réalisation, et peut être mise en place sans qu'il soit nécessaire de prévoir un intervalle de montage 112. Du fait de l'enroulement en spirale de cette tôle fine 120, le montage et l'ajustement de la plaque annulaire 100 sont facilités.

Un autre avantage du deuxième mode de réalisation par rapport au premier mode de réalisation réside dans le fait que la structure en tôle fine enroulée 120 confère à la plaque annulaire 100 une souplesse qui lui permet de s'adapter aux déplacements relatifs des deux parties d'anneaux 12, 14, c'est-à-dire des deux secteurs, ce qui assure une meilleure étanchéité. Cette souplesse résulte du fait que les enroulements peuvent glisser les uns contre les autres.

Pour illustrer ce qui précède, les dimensions suivantes sont compatibles avec l'invention :
Premier mode de réalisation :
   - épaisseur de la « tôle épaisse » : 0,6 mm
   - largeur de l'intervalle de montage 112 : 11 mm
Deuxième mode de réalisation :
   - épaisseur de la tôle fine : 0,2 mm
   - nombre de tours d'enroulement : 3

Ainsi, pour une épaisseur totale identique (0,6 mm) de la plaque annulaire 100, la plaque annulaire 100 du deuxième mode de réalisation présente une souplesse meilleure que la plaque annulaire 100 du premier mode de réalisation.

La plaque annulaire 100 peut être réalisée en tout matériau capable de résister à une haute température, comme par exemple un métal tel que l'acier, de manière à former un écran thermique entre la veine d'écoulement des gaz 2 et l'enceinte extérieure 4 au niveau du jeu fonctionnel 20. Des aciers actuels qui remplissent cette condition sont connus sous les dénominations Waspaloy, HA188, ou encore INCO 718.

L'invention n'est pas limitée aux modes de réalisation qui viennent d'être décrits.

En particulier, la plaque annulaire 100 selon le deuxième mode de réalisation peut être constituée d'une tôle fine enroulée 2 fois, ou plus de 3 fois, par exemple 5 fois, 8 fois, 10 fois, en fonction de la dimension radiale de l'espace annulaire 38 et de la mâchoire 30 de la pièce en forme de mors 28.

Egalement, dans une configuration différente, par exemple dans une autre localisation de la turbomachine que celle qui vient d'être décrite, la forme de la plaque annulaire 100 peut être différente. De manière commune au premier mode de réalisation et au deuxième mode de réalisation, la forme de la plaque annulaire 100 est adaptée aux pièces de l'environnement immédiat du jeu fonctionnel 20 et à un maintien en position contre le jeu fonctionnel 20.

Ainsi, avec le dispositif d'étanchéité aux gaz selon le premier aspect de l'invention, il est possible d'éviter que l'air très chaud circulant dans la veine d'écoulement des gaz de la turbomachine ne soit réintroduit dans une enceinte extérieure à cette veine de gaz très chaud, ce qui permet d'éviter une élévation de température de cette enceinte.

De manière préférée, la turbomachine est un moteur d'aéronef, qui comporte au moins un dispositif d'étanchéité conforme au premier aspect de l'invention.

## Revendications

1. Turbine comprenant un carter (26), une première partie d'anneau (12) et une seconde partie d'anneau (14) disposées dans le prolongement l'une de l'autre et espacées par un jeu fonctionnel (20), la deuxième partie d'anneau présentant une gorge annulaire axiale (32) possédant un bord extérieur (34) et un bord intérieur (36) et étant fixée sur le carter (26) par l'intermédiaire d'une pièce annulaire (28) en forme de mors ayant une mâchoire (30) s'appuyant sur le bord extérieur (34) de la gorge annulaire (32), **caractérisée en ce qu'**elle comporte en outre une plaque annulaire d'étanchéité recouvrant le jeu fonctionnel (20), la plaque annulaire comportant un premier bord longitudinal (108) situé du côté de la première partie d'anneau (12) et un deuxième bord longitudinal (110) situé du côté de la deuxième partie d'anneau (14), l'épaisseur de la plaque annulaire (100) étant adaptée pour que la plaque annulaire (100) et la mâchoire (30) soient jointes l'une contre l'autre et serrées de manière ajustée dans la gorge annulaire (32).

2. Turbine selon la revendication 1,
**caractérisée en ce que** le deuxième bord longitudinal (110) comporte un épaulement qui épouse la forme de l'extrémité de la mâchoire (30).

3. Turbine selon la revendication 1 ou 2, **caractérisée en ce que** le premier bord longitudinal est courbé radialement vers l'extérieur.

4. Turbine selon l'une des revendications 1 à 3, **caractérisée en ce que** ladite plaque annulaire (100) est enroulée sur elle-même sur un seul tour, ses deux extrémités (104, 106) étant séparées l'une de l'autre par un intervalle déterminé (112).

5. Turbine selon l'une des revendications 1 à 3, **caractérisée en ce que** ladite plaque annulaire (100) est enroulée sur elle-même sur plusieurs tours à la façon d'une spirale.

6. Turbine selon la revendication 5, **caractérisée en ce que** ladite plaque annulaire (100) est enroulée sur 3 tours.

7. Turbine selon la revendication 5, **caractérisée en ce que** ladite plaque annulaire (100) est enroulée sur 5 tours.

8. Moteur d'aéronef, **caractérisé en ce qu'**il comporte au moins une turbine selon l'une des revendications 1 à 7.

## Claims

1. Turbine comprising a casing (26), a first ring portion (12) and a second ring portion (14) arranged in the extension one in relation to the other and separated by a functional clearance (20), the second ring portion presenting an annular axial groove (32) having an exterior edge (34) and an interior edge (36) and being fixed on the casing (26) by the intermediary of an annular part (28) in the form of a jaw support having a jaw (30) supported by the exterior edge (34) of the annular groove (32), **characterised in that** it further comprises an annular seal plate covering the functional clearance (20), the annular plate comprising a first longitudinal edge (108) located on the side of the first ring portion (12) and a second longitudinal edge (110) located on the side of the second ring portion (14), the thickness of the annular plate (100) being adapted so that the annular plate (100) and the jaw (30) are sealed one against the other and tightened in an adjusted manner in the annular groove (32).

2. Turbine set forth in claim 1, **characterised in that** the second longitudinal edge (110) comprises a shoulder that fits the shape of the end of the jaw (30).

3. Turbine set forth in claim 1 or 2,
**characterised in that** the first longitudinal edge is curved radially towards the exterior.

4. Turbine according to one of claims 1 to 3, **characterised in that** said annular plate (100) is wound thereon on a single turn, its two ends (104, 106) being separated one from the other by a determined interval (112).

5. Turbine according to one of claims 1 to 3, **characterised in that** said annular plate (100) is wound thereon on several turns in the manner of a spiral.

6. Turbine set forth in claim 5, **characterised in that** said annular plate (100) is wound on 3 turns.

7. Turbine set forth in claim 5, **characterised in that** said annular plate (100) is wound on 5 turns.

8. Aircraft engine, **characterised in that** it comprises at least one turbine according to one of claims 1 to 7.

## Patentansprüche

1. Turbine mit einem Gehäuse (26), einem ersten Ringabschnitt (12) und einem zweiten Ringabschnitt (14), die jeweils in Verlängerung zueinander und durch ein funktionales Spiel (20) voneinander getrennt angeordnet sind, wobei der zweite Ringabschnitt eine axial verlaufende ringförmige Auskehlung (32) aufweist, die einen Außenrand (34) und einen Innenrand (36) besitzt und an dem Gehäuse (26) vermittels eines ringförmigen Teils (28) in der Form eines Klemmmauls, das mit einer Klemmbacke (30) an dem Außenrand (34) der ringförmigen Auskehlung (32) sitzt, befestigt ist,
**dadurch gekennzeichnet,**
**dass** sie ferner eine ringförmige Dichtungsplatte enthält, die das funktionale Spiel (20) überdeckt, wobei die ringförmige Platte einen ersten Längsrand (108), der sich auf der Seite des ersten Ringabschnitts (12) befindet, und einen zweiten Längsrand (110), der sich auf der Seite des zweiten Ringabschnitts (14) befindet, aufweist, wobei die Dicke der ringförmigen Platte (100) dahingehend angepasst ist, dass die ringförmige Platte (100) und die Klemmbacke (30) aneinander liegend und aneinandergepresst angeordnet sind, so dass sie sich ausgerichtet in der ringförmigen Auskehlung (32) befinden.

2. Turbine nach Anspruch 1,
**dadurch gekennzeichnet,**
**dass** der zweite Längsrand (110) einen Absatz aufweist, der die Form des Endes der Klemmbacke (30) annimmt.

3. Turbine nach Anspruch 1 oder 2,
**dadurch gekennzeichnet,**
**dass** der erste Längsrand radial nach außen gekrümmt ist.

4. Turbine nach einem der Ansprüche 1 bis 3,
**dadurch gekennzeichnet,**
**dass** die ringförmige Platte (100) nur in einer Windung auf sich selbst aufgewickelt ist, wobei ihre beiden Enden (104, 106) voneinander durch einen bestimmten Zwischenraum (112) getrennt sind.

5. Turbine nach einem der Ansprüche 1 bis 3,
**dadurch gekennzeichnet,**
**dass** diese ringförmige Platte (100) in mehreren Windungen spiralenförmig auf sich selbst aufgewickelt ist.

6. Turbine nach Anspruch 5,
**dadurch gekennzeichnet,**
**dass** diese ringförmige Platte (100) in drei Windungen aufgewickelt ist.

7. Turbine nach Anspruch 5,
**dadurch gekennzeichnet,**
**dass** diese ringförmige Platte (100) in fünf Windungen aufgewickelt ist.

8. Flugzeugmotor,
**dadurch gekennzeichnet,**
**dass** er mindestens eine Turbine nach einem der Ansprüche 1 bis 7 enthält.
